Europäisches Patentamt

European Patent Office

Office européen des brevets

(19)

(11) Veröffentlichungsnummer: **0 026 368
B1**

(12) # EUROPÄISCHE PATENTSCHRIFT

(45) Veröffentlichungstag der Patentschrift:
26.05.82

(21) Anmeldenummer: **80105413.1**

(22) Anmeldetag: **10.09.80**

(51) Int. Cl.³: **D 21 H 1/28,** C 08 F 212/08 //
(C08F212/08, 236/06)

(54) **Bindemittel für Papierstreichmassen.**

(30) Priorität: **29.09.79 DE 2939657**

(43) Veröffentlichungstag der Anmeldung:
**08.04.81 Patentblatt 81/14**

(45) Bekanntmachung des Hinweises auf die Patenterteilung:
**26.05.82 Patentblatt 82/21**

(84) Benannte Vertragsstaaten:
**AT BE CH DE FR GB IT LI NL SE**

(56) Entgegenhaltungen:
**DE-A-1 795 303
DE-B-1 248 836**

(73) Patentinhaber: **BASF Aktiengesellschaft,
Carl-Bosch-Strasse 38, D-6700 Ludwigshafen (DE)**

(72) Erfinder: **Distler, Dieter, Dr., Pfalzring 123,
D-6704 Mutterstadt (DE)**
Erfinder: **Mueller, Gerhart H. Dr., \*, Verstorben (DE)**
Erfinder: **Bubam, Hans-Georg, Dr.,
Thorwaldsenstrasse 5, D-6700 Ludwigshafen (DE)**
Erfinder: **Addicks, Guenther, Dr., Dubliner Strasse 3,
D-6700 Ludwigshafen (DE)**

## Bindemittel für Papierstreichmassen

Aus der GB-A-1 174 274 sind Papierstreichmassen bekannt, die auf 100 Gew.-Teile eines feinteiligen Pigments 1 bis 25 Gew.-Teile eines synthetischen Binders enthalten. Der synthetische Binder besteht aus einer Mischung von Copolymerisaten A und B, wobei als Copolymerisat A auch ein Copolymerisat aus 20 bis 70 Gew.-% Styrol und/oder Acrylnitril, 20 bis 80 Gew.-% Butadien, 0 bis 30 Gew.-% von Estern der Acrylsäure oder Methacrylsäure und 0 bis 10 Gew.-% anderen äthylenisch ungesättigten Monomeren in Betracht kommt. Das Copolymerisat B hat einen K-Wert von 12 bis 40 und besteht aus 60 bis 95 Gew.-% Estern der Acrylsäure oder Methacrylsäure, 5 bis 40 Gew.-% äthylenisch ungesättigten Carbonsäuren und 0 bis 10 Gew.-% anderen äthylenisch ungesättigten Monomeren, wobei die Mischung der Copolymerisate A und B 0,5 bis 10 Gew.-% des Copolymerisates B enthält.

Aus der DE-C-1 546 316 ist ein Bindemittelgemisch für neutrale oder alkalische Papierstreichmassen bekannt, bei dem das Copolymerisat A der Bindemittelmischung aus 10 bis 60 Gew.-% Butadien, 30 bis 60 Gew.-% Styrol und/oder Acrylnitril und 10 bis 50 Gew.-% Estern von äthylenisch ungesättigten Carbonsäuren mit 3 bis 5 Kohlenstoffatomen und ggf. bis 10 Gew.-% anderen äthylenisch ungesättigten, copolymerisierbaren Verbindungen besteht. Das Copolymerisat B der Bindemittelmischung enthält 15 bis 55 Gew.-% Acrylsäure und/oder Methacrylsäure, ggf. bis zu 10 Gew.-% Acryl- bzw. Methacrylsäureamid und 85 bis 45 Gew.-% andere, wasserunlösliche Homopolymerisate bildende Monomere, z.B. Ester der Acrylsäure oder Methacrylsäure. Die Bindemittelmischung enthält 95 bis 60 Gew.-Teile des Copolymerisates A und 5 bis 40 Gew.-Teile des Copolymerisates B.

Die DE-A-1 795 303 betrifft ein spezielles Verfahren zur Herstellung eines wässrigen Latex, bei dem man eine Monomerenmischung aus 30 bis 80 Gew.-Teilen eines konjugierten Diolefins, 20 bis 70 Gew.-Teilen eines Arylvinylmonomeren, 0,5 bis 10 Gew.-Teilen einer äthylenisch ungesättigten Carbonsäure und 0,1 bis 5 Gew.-Teilen eines äthylenisch ungesättigten primären Amids unter definierten Bindungen polymerisiert. Die Latices werden als Bindemittel für Papierstreichmassen verwendet.

Als ethylenisch ungesättigte Carbonsäure kann unter anderem auch Maleinsäure und als Amid einer ethylenisch ungesättigten Carbonsäure Methacrylamid verwendet werden. Aus dieser Literaturstelle kann jedoch nicht gefolgert werden, dass man gerade Kombinationen von Maleinsäure und Methacrylamid zusammen mit Butadien und Styrol copolymerisieren soll, um zu Dispersionen mit einem verbesserten Geruchs- und Viskositätsverhalten zu gelangen.

Die bekannten Dispersionen auf Basis von Butadien und Styrol sind zwar gute Pigmentbindemittel, jedoch ergeben sich bei der Verarbeitung der wässrigen Dispersionen sehr störende Geruchsbelästigungen. Auch den Papieren, die mit Streichfarben beschichtet wurden, die die bekannten Butadienstyroldispersionen als Bindemittel enthalten, haftet noch der unangenehme Geruch der Dispersion an. Nachteilig bei den bekannten Bindemitteln auf Basis von Styrol und Butadien ist ferner die Tatsache, dass ihr Einsatz in Stärkestreichfarben nicht zu viskositätstabilen Produkten führt. Man erhält vielmehr Papierstreichmassen, deren Viskosität sich nach der Homogenisierung in unerwünschtem Masse erhöht (sogenannte Nachverdickung), so dass sich dadurch Schwierigkeiten bei der Verarbeitung ergeben.

Aufgabe der Erfindung ist es, ein Bindemittel zur Herstellung von Papierstreichmassen zur Verfügung zu stellen, das ein verbessertes Geruchs- und Viskositätsverhalten sowie ein besseres Pigmentbindevermögen aufweist.

Die Aufgabe wird erfindungsgemäss gelöst mit wässrigen Dispersionen von Copolymerisaten aus

a) 25 bis 57,5 Gew.-% Butadien oder Mischungen aus Butadien und Acrylester, wobei der Gehalt des einpolymerisierten Butadiens mindestens 15 Gew.-% beträgt,

b) 40 bis 70 Gew.-% Styrol,

c) 1 bis 5% Maleinsäure oder Maleinsäureanhydrid und

d) 1,5 bis 7 Gew.-% Methacrylamid.

Die Copolymerisate enthalten als Komponente a) 25 bis 57,5 Gew.-% Butadien. Ein Teil des einpolymerisierten Butadiens kann durch Acrylester von Alkoholen mit 1 bis 4 C-Atomen ersetzt sein. Der Mindestgehalt an einpolymerisiertem Butadien beträgt in diesem Fall 15 Gew.-%. Der Gehalt an einpolymerisiertem Acrylester im Copolymerisat liegt zwischen 0 und 45, vorzugsweise zwischen 0 und 25 Gew.-%. Als Acrylsäureester kommt vorzugsweise Acrylsäure-n-butylester in Betracht. Ausserdem eignen sich Acrylsäure-i-butylester, Acrylsäure-tert.-butylester, Acrylsäurepropylester, Acrylsäureäthylester, Acrylsäuremethylester. Die Monomeren der Komponente a) sind vorzugsweise zu 25 bis 50 Gew.-% am Aufbau des Copolymerisats beteiligt.

Das Copolymerisat enthält als weiteren Bestandteil (Komponente b) 40 bis 70, vorzugsweise 45 bis 65 Gew.-% Styrol einpolymerisiert. Je höher der Styrolgehalt des Copolymerisates ist, desto härter sind die Copolymerisatfilme. Eine Erhöhung des Styrolgehalts der Copolymerisate innerhalb des oben angegebenen Bereiches hat keinen wesentlichen Einfluss auf die Nassrupffestigkeit der Papierstriche; die Trockenrupffestigkeit der Papierstriche sinkt dagegen erwartungsgemäss mit zunehmender Härte der Copolymerisate.

Ersetzt man in den Copolymerisaten Butadien teilweise durch z.B. n-Butylacrylat, so lassen sich mit diesen Dispersionen gestrichene Papiere herstellen, deren Vergilbungsneigung verringert ist. Solange der Butadiengehalt im Copolymerisat 15% nicht unterschreitet, bleiben die übrigen hervorragenden Eigenschaften der Dispersion und der damit hergestellten Pigmentstriche erhalten.

Ein weiterer wesentlicher Bestandteil des Copolymerisates ist die Komponente c) mit 1 bis 5 Gew.-% Maleinsäure oder Maleinsäureanhydrid sowie die Komponente d) mit 1,5 bis 7 Gew.-% Methacrylamid.

Die Auswahl der Komponenten c) und d) ist entscheidend, um geruchsarme wässrige Dispersionen auf Basis von Butadien und Styrol herzustellen und ergibt ausserdem Dispersionen, die beim Einsatz in Stärkestreichfarben zu einer nur unwesentlichen Viskositätserhöhung der Papierstreichmasse (Nachverdickung) führen. Dieser Befund war nicht vorhersehbar, weil beispielsweise der Ersatz des Methycrylamids durch Acrylamid wässrige Dispersionen und auch Streichmassen mit hohen Viskositäten ergibt, die anwendungstechnisch ungünstige Eigenschaften haben. Ersetzt man in dem erfindungsgemäss zu verwendenden Copolymerisat Maleinsäure oder Maleinsäureanhydrid durch Methacrylsäure oder Acrylsäure, so verschlechtert sich das Geruchsverhalten der wässrigen Dispersion und der Papierstreichmassen erheblich. Stellt man dagegen Copolymerisate her, die kein Methacrylamid einpolymerisiert enthalten, so steigt die Teilchengrösse der Dispersion, wodurch sich die Bindekraft verschlechtert. In diesem Falle ist es zwar möglich, durch Erhöhung des Emulgatoranteils während der Polymerisation die Teilchengrösse der Copolymerisatteilchen zu senken, jedoch erhält man dabei wässrige Dispersionen, die in Papierstreichfarben instabil sind und in der Leimpresse schon nach kurzer Zeit Ablagerungen auf den Walzen bilden. Es war daher überraschend, dass durch die Auswahl der Komponenten a) bis d) wässrige Polymerdispersionen erhalten werden, die sich durch ein besonders niedriges Geruchsniveau sowohl der wässrigen Dispersion als auch des Polymerfilms und auch der gestrichenen Papiere auszeichnet. Die hohe Scherstabilität der erfindungsgemäss zu verwendenden Dispersionen – sowohl in reiner Form als auch in der fertigen Papierstreichmasse – gewährleistet auch auf der Leimpresse eine gute Verarbeitbarkeit der Dispersion.

Die erfindungsgemäss zu verwendenden wässrigen Dispersionen der Copolymerisate werden durch Copolymerisieren der Monomeren in wässriger Emulsion nach an sich bekannten Verfahren hergestellt. Um die Monomeren in Wasser zu emulgieren, verwendet man die üblichen anionischen und/oder nichtionischen Emulgiermittel. Für die Initiierung der Polymerisationsreaktion verwendet man die bekannten radikalischen Polymerisationsinitiatoren, z.B. Peroxide, Hydroperoxide oder sogenannte Redoxkatalysatoren. Die Polymerisationsinitiatoren werden üblicherweise in einer Menge von 0,3 bis 1,5 Gew.-% , bezogen auf die Monomeren, verwendet. Zur Regelung des Molekulargewichts können die üblichen Kettenübeträger, z.B. n-Dodecylmerkaptan, Cyclohexen oder Tetrachlorkohlenstoff, in Mengen von etwa 0,2–1%, bezogen auf die Monomeren, verwendet werden. Die Polymerisationstemperatur kann in einem weiten Bereich variiert werden, z.B. zwischen 60 und 100°C. Bei Verwendung von Redoxkatalysatoren gelingt es, die Monomeren auch in dem Temperaturbereich zwischen 40 und 60°C zu polymerisieren.

Die Polymerisatkonzentration in der wässrigen Dispersion kann in weiten Bereichen variiert werden. Aus wirtschaftlichen Erwägungen heraus werden Dispersionen mit einem hohen Feststoffgehalt angestrebt. Der Feststoffgehalt der wässrigen Dispersionen beträgt daher vorzugsweise 20 bis 60 Gew.-%.

Die erfindungsgemäss als Bindemittel zu verwendenden Copolymerisate können mit bekannten natürlichen Bindemitteln, wie Kasein oder Stärke kombiniert werden. Dabei verwendet man dann, jeweils bezogen auf die Feststoffe, auf 1 Gew.-Teil des synthetischen Bindemittels 0,3 bis 3 Gew.-Teile eines oder mehrerer natürlicher Bindemittel. Die erfindungsgemäss zu verwendenden Copolymerisate können jedoch auch in Kombination mit bekannten Verdickerdispersionen, ohne zuhilfenahme von natürlichen Bindemitteln in Papierstreichmassen eingesetzt werden. Geeignete Verdickerdispersionen sind beispielsweise aus der DE-C-1 546 316 bekannt. Sie werden darin als Copolymerisat B bezeichnet. Diese Copolymerisate sind in wässrigem Medium durch Zusatz von Basen verdickbar, d.h. die Viskosität der Copolymerisatlösung nimmt zu. Diese Copolymerisate enthalten 15 bis 55 Gew.-% Acrylsäure oder Methacrylsäure, 0 bis 10 Gew.-% Acrylamid oder Methacrylamid und 85 bis 45 Gew.-% hydrophobe, wasserunlösliche Homopolymerisate bildende Monomere, von denen mindestens 20 Gew.-% Ester der Acrylsäure oder Methacrylsäure mit aliphatischen $C_1$- bis $C_4$-Alkoholen sind. Als hydrophobe, äthylenisch ungesättigte Verbindungen kommen z.B. Acrylsäure- und Methacrylsäureester höherer aliphatischer, cycloaliphatischer oder aromatischer Hydroxylverbindungen, Styrol, Vinylacetat, Vinylpropionat oder Acrylnitril in Betracht. Für die Herstellung von Papierstreichmassen werden Mischungen aus dem synthetischen Bindemittel und dem Verdickungsmittel verwendet, die 2 bis 50 Gew.-% des synthetischen Verdickungsmittels enthalten.

Die Papierstreichmassen enthalten auf 100 Gew.-Teile eines feinteiligen Pigments 5 bis 25 Gew.-Teile des gemäss Erfindung zu verwendenden Copolymerisats als Bindemittel und 0,5 bis 15 Gew.-Teile eines natürlichen Bindemittel bzw. 0,5 bis 5 Gew.-Teile eines synthetischen Verdikkungsmittels, wobei sich die angegebenen Gew.-Teile jeweils auf die Feststoffe beziehen. Sie werden hergestellt, indem man die einzelnen Komponenten miteinander mischt. Geeignete Pigmente sind vor allem Tonmineralien, Calciumcarbonate, Calciumaluminiumpigmente oder Titandioxid. Gegebenenfalls kann man den Papierstreichmassen auch noch andere Hilfsmittel zusetzen, z.B. Alkalilaugen, wie Natriumhydroxid, Calciumhydroxid oder Ammoniak oder auch Weisspigmente auf der Basis von wasserunlöslichen Harnstoff-Formaldehyd-Kondensations-Produkten oder die entsprechenden Melamin-Formaldehyd-Kondensationsprodukte sowie auch andere bekannte Papierhilfsstoffe, wie Harnstoff, Melamin, Melamin-Formaldehyd-Harze oder Harnstoff-Formaldehyd-Harze.

Um eine gute Dispergierung der Stoffe in der wässrigen Papierstreichmasse zu erreichen, verwendet man in der Regel 0,1 bis 5 Gew.-% eines Dispergiermittels, z.B. niedrigmolekulare Polymerisate der Acrylsäure, besonders die Ammonium- oder Natriumsalze von Polyacrylsäure eines K-Wertes von 10–25. Die Reihenfolge, in der die einzelnen Komponenten der Papierstreichmasse gemischt werden, ist für die Eigenschaften der erhaltenen Papierstreichmassen nicht entscheidend.

Die Erfindung wird anhand der folgenden Beispiele näher erläutert. Die in den Beispielen angegebenen Teile sind Gew.-Teile, die Prozentangaben beziehen sich, sofern nichts anderes vermerkt ist, ebenfalls auf das Gewicht der Stoffe. Die K-Werte der Polymerisate wurde nach H. Fikentscher, Cellulosechemie 13, 58–64 und 71–74 (1932) in 0,5%iger wässriger Lösung bei einer Temperatur von 25°C gemessen; dabei bedeutet $K = k \cdot 10^3$. Als Mass für die Pigmentbindung wurde die Trockenrupffestigkeit nach dem Standardprüfverfahren gemäss IGT-Test ermittelt.

Durchführung des Nassrupftests

Der Papierstreifen wird wie bei der Trockenrupffestigkeitsprüfung auf das Kreissegment des IGT-Gerätes eingespannt. Auf die obere Druckscheibenachse wird eine 3,2 cm breite Druckscheibe, auf die untere Druckscheibenachse eine 2 cm breite, eingefärbte Druckscheibe aufgesetzt. Das Kreissegment mit dem eingespannten Prüfstreifen wird sodann in Rupfstellung gedreht. Die Druckeinstellung beträgt bei beiden Druckscheiben 687 N. Nun tropft man zwischen Kreissegment mit eingespanntem Prüfstreifen und oberer Druckscheibe 0,2 cm³ Wasser und rupft sofort mit konstanter Geschwindigkeit, deren Einstellung zwischen 18- und 40 cm/s betragen soll, da das Wasser sonst eine zu kurze Einwirkungszeit hat.

Zur Auswertung misst man die Farbintensität des Prüfstreifens und setzt den entsprechenden D-Wert in Relation zu einem im Vollton bedruckten Streifen.

$$\text{Nassrupffestigkeit} = \frac{\text{D-Wert Prüfstreifen} \times 100}{\text{D-Wert Vollton}}$$

Geruchsprüfung

a) Triangel-Test, beschrieben in U.S. Dept. Agr., Bi-Annual Report, Bur. Agr. Econ. 1 (1950)

b) Robinson-Test, beschrieben in Verpakkungs-Rundschau 12 (1961), Heft 3, S. 17–22

Es wird benotet: 1 = kein Geruch
bis 6 = starker Geruch

Die Viskositäten wurden mit einem Brookfieldviskosimeter in einem Schergefälle bei 20 bzw. 100 Umdrehungen pro Minute (Upm) gemessen.

A. Herstellung von Dispersionen auf Basis Butadien und Styrol

Dispersion 1: In einem 150 l fassenden Polymerisationsreaktor werden 17 kg Waser, 0,6 kg 15%ige wässrige Natriumlaurylsulfatlösung, 0,1 kg 20%ige wässrige Natriumlaurylsulfonatlösung und 1 g Tetranatrium-äthylendiamintetraacetat vorgelegt, mit Stickstoff gespült und auf 80°C erwärmt. Wenn die Temperatur der Vorlage 80°C erreicht hat, lässt man aus einem Zulaufgefäss 8 l einer Emulsion innerhalb von 3 Minuten zulaufen, die durch Mischen von

24 kg Butadien,
24 kg Styrol,
1 kg Maleinsäure,
2 kg Methacrylamid,
0,25 kg Tertiärdodecylmercaptan,
2,6 kg einer 15%igen wässrigen Natriumlaurylsulfatlösung und 23 kg Wasser

erhalten worden ist. Aus einem zweiten Zulaufgefäss, in dem eine Lösung von 0,5 kg Ammoniumperoxodisulfat in 7 kg Wasser enthalten ist, wird innerhalb von 2 Minuten ein Liter dieser Lösung in den Polymerisationsreaktor dosiert. Die im Polymerisationsreaktor vorgelegte Mischung wird zunächst 20 Minuten bei 80°C gerührt. Innerhalb von 4 Stunden wird dann der Rest der Monomeren-Emulsion und der Rest der Peroxodisulfatlösung zudosiert. Danach wird das Reaktionsgemisch noch 3,5 Stunden bei 80°C nachpolymerisiert. Man erhält eine wässrige Dispersion mit einem Feststoffgehalt von ca. 50%. Die Polymerdispersion wird mit wässrigem Ammoniak neutralisiert und daran anschliessend unter vermindertem Druck mit Dampf behandelt, um sie zu desodorieren und die restlichen Monomeren zu entfernen. Die Polymerisatteilchen der Dispersion haben eine mittlere Teilchengrösse von ca. 80 bis 200 nm. Die Dispersion ist sehr geruchsarm, stippenfrei und niedrigviskos (Viskosität bei 20 Upm 400 bis 800 mPas, bei 100 Upm 150 bis 250 mPas).

Vergleichsdispersion 1: Ersetzt man die bei der Herstellung der Dispersion 1 verwendete Menge an Methacrylsäureamid durch die selbe Menge Acrylamid, so steigt die Viskosität der wässrigen Dispersion so stark an, dass sie nicht mehr gepumpt werden kann und damit auch für die weitere Verarbeitung unbrauchbar ist.

Vergleichsdispersion 2: Die unter Dispersion 1 gegebene Vorschrift wird dahingehend abgewandelt, dass an Stelle des Methacrylamids 1,5 kg (3%) Acrylamid eingesetzt wird. Auch in diesem Fall erhält man eine wässrige Dispersion, deren Viskosität bei pH 6 und einem Feststoffgehalt von 50% ungünstige Verarbeitungseigenschaften aufweist. Die Viskositäten betragen bei 20 Upm 2800 bis 3600 mPas und bei 100 Upm 1000 bis 1300 mPas.

Die Viskosität der wässrigen Dispersionen soll, um eine gute Verarbeitbarkeit zu gewährleisten, bei 20 Upm unterhalb von 1000 mPas und bei 100 Upm unterhalb von 400 mPas liegen.

Vergleichsdispersion 3: Stellt man nach der unter Dispersion 1 angegebenen Vorschrift eine Dispersion her, die kein Methacrylamid einpolymerisiert enthält, so erhält man eine grobteiligere Dispersion.

Streichfarben, die diese Dispersion als Bindemittel enthalten, ergeben bei einem Bindemittelgehalt unterhalb von 10% nicht zufriedenstellende Werte für die Trockenrupffestigkeit der gestrichenen Papiere.

Vergleichsdispersion 4: Stellt man eine Dispersion gemäss der Vorschrift für die Dispersion 1 her, ersetzt jedoch die Maleinsäure durch die selbe Menge

a) Methacrylsäure oder in einem anderen Polymerisationsansatz durch
b) Acrylsäure,

so erhält man in beiden Fällen eine wässrige Dispersion, die einen unangenehmen Geruch hat, der sich auch am Polymerfilm bzw. am Papier wiederfindet, das mit Papierstreichmassen gestrichen ist, die diese Copolymerdispersionen als Bindemittel enthalten.

Bei der Geruchsprüfung, die von 15 Personen durchgeführt wurde, wurde übereinstimmend an den acrylsäure- bzw. methacrylsäurehaltigen Dispersionen ein signifikant stärker unangenehmerer Geruch festgestellt als an der maleinsäurehaltigen Dispersion 1.

Vergleichsdispersion 5: Nach der unter Dispersion 1 angegebenen Vorschrift wird eine weitere Dispersion hergestellt, die jedoch anstelle von Maleinsäure die selbe Menge Fumarsäure enthält. Aufgrund der schlechten Wasserlöslichkeit der Fumarsäure treten schon bei der Dosierung der Fumarsäure Verstopfungen an den Dosier- und Filtriereinrichtungen auf. Die erhaltene Dispersion wies ausserdem Stippen auf.

Verzichtet man auf den Zusatz von carboxylgruppenhaltigen Monomeren bei der Herstellung der Dispersionen, so sinkt die Verträglichkeit der Dispersionen mit Pigmenten. Ausserdem steigt die Viskosität von stärkehaltigen Papierstreichmassen bei der Lagerung so stark an, dass die Massen auf schnellaufenden Streichmaschinen nicht mehr verarbeitet werden können.

Vergleichsdispersion 6: Nach der unter Dispersion 1 angegebenen Vorschrift wird eine Dispersion hergestellt, bei der in Abänderung der Vorschrift keine Maleinsäure, jedoch ingesamt 2,5 kg (5%) Methacrylamid eingesetzt werden.

Dispersion 2: Nach der unter Dispersion 1 gegebenen Vorschrift wird eine wässrige Dispersion hergestellt, die anstelle von 2 jetzt 2,5 kg (5%) Methacrylsäureamid einpolymerisiert enthält.

B. Herstellung von Papierstreichmassen
Beispiel 1

In 200 g Wasser, das 1,2 g Polyphosphat und 0,4 g Natronlauge gelöst enthält, werden 400 g eines Streichclay unter Einwirkung hoher Scherkräfte (Dissolver) eingetragen und 20 Minuten dispergiert. In diese Pigmentsuspension werden dann unter Rühren 160 g einer 30%igen wässrigen Lösung einer oxidativ abgebauten Kartoffelstärke und 32 g der 50%igen wässrigen Dispersion 2 gegeben.

Zum Vergleich wird eine Streichfarbe hergestellt, die anstelle der Dispersion 2 32 g der 50%igen wässrigen Vergleichsdispersion 6 enthält.

Von beiden Streichfarben wird die Viskosität bei einem Feststoffgehalt von 56% und pH 7 nach einer Stunde und nach einer Standzeit von 4 Stunden gemessen. Besonders störend für die Verarbeitung ist die starke Neigung zur Nachverdickung bei Verwendung der Vergleichsdispersion 6 zur Herstellung der Streichfarben. Die Papierstreichmassen hatten folgende Viskositäten:

| Papierstreichmasse enthaltend als Bindemittel | Viskosität [mPas] gemessen | | | |
| --- | --- | --- | --- | --- |
| | bei 20 Upm nach | | 100 Upm nach | |
| | 1 h | 4 h | 1 h | 4 h |
| Vergleichsdispersion 6 | 6 000 | 40 500 | 2 240 | 10 000 |
| Dispersion 2 | 4 000 | 4 500 | 1 200 | 1 450 |

Bei anwendungstechnisch brauchbaren Papierstreichmassen darf die Viskosität bei 100 Upm nach einer Stunde und nach 4 Stunden einen Wert von 2500 mPas nicht übersteigen. Die mit der Vergleichsdispersion 6 erhaltene Papierstreichmasse ist daher nicht brauchbar.

Nach der unter Dispersion 1 angegebenen Vorschrift wurden weitere Dispersionen und Vergleichsdispersionen hergestellt und gemäss Beispiel 1 für die Bereitstellung von Papierstreichmassen verwendet. In der Tabelle I sind die Zusammensetzungen der Polymerisatdispersionen sowie die Werte für die Trocken- und Nassrupffestigkeit von Pigmentstrichen zusammengestellt.

**Tabelle I**

| Dispersion | Nr. | Bu % | St % | iBA % | nBA % | MS % | MAM % | sonstige | Trocken-rupf-festig-keit cm/sec | Nass-rupf-festig-keit % | Bemerkungen |
|---|---|---|---|---|---|---|---|---|---|---|---|
| | 1 | 47 | 47 | – | – | 2 | 4 | – | 197 | 48 | Dispersionen |
| | 2 | 46,5 | 46,5 | – | – | 2 | 5 | – | 203 | 62 | haben sehr |
| | 3 | 47,5 | 47 | – | – | 4 | 1,5 | – | 200 | 56 | niederes |
| | 4 | 20 | 48 | – | 28 | 2 | 2 | – | 148 | 47 | Geruchsniveau und |
| | 5 | 34,5 | 40 | 20 | – | 2,5 | 3 | – | 183 | 37 | lassen sich gut |
| | 6 | 30 | 65 | – | – | 2 | 3 | – | 92 | 47 | verarbeiten |
| Vergleichs-dispersion | 3 | 48 | 48 | – | – | 2 | – | – | 110 | 12 | Farbe ist nicht stabil auf der Leimpresse |
| | 6 | 47,5 | 47,5 | – | – | – | 5 | – | 194 | 45 | Viskosität der Stärkestreichfarbe zu hoch |
| | 7 | 47,5 | 47 | – | – | – | 2 | 3,5 AS | 192 | 27 | starker Geruch |
| | 8 | 47,5 | 47,5 | – | – | – | 2 | 3 MAS | 172 | 25 | starker Geruch |

| | | | |
|---|---|---|---|
| Bu | Butadien-1,3 | MS: | Maleinsäure |
| St: | Styrol | MAM: | Methacrylamid |
| iBA: | Isobutylacrylat | AS: | Acrylsäure |
| nBA: | n-Butylacrylat | MAS: | Methacrylsäure |

Beispiel 2

In 200 kg Wasser, das 1,2 g Natriumsalz der Polyacrylsäure und 0,4 g Natriumhydroxid gelöst enthält, werden 400 g eines englischen Steichclay unter Einwirkung hoher Scherkräfte (Dissolver) eingetragen und 20 Minuten dispergiert. In diese Pigmentanschlämmung werden 84 kg der 50%igen Dispersion 1 und 7 kg der aus DE-C-1 546 316, Beispiel 1 bekannten 30%igen Verdickerdispersion, bestehend aus 75% Äthylacrylat, 20% Acrylsäure und 5% Acrylamid unter Umrühren zugegeben. Anschliessend wird die Streichfarbe mit 20%iger Natronlauge auf pH 8–9 und der Feststoffgehalt mit Wasser auf 58% eingestellt.

Zum Vergleich wird eine Papierstreichmasse mit der Vergleichsdispersion 4b (entsprechend DE-C 1 546 316) mit entsprechendem Feststoffgehalt und entsprechender Viskosität (ca. 1000 mPa $\times$ s/100 UpM Brookfield) hergestellt.

Beide Streichfarben werden mittels eines blade-coaters beidseitig auf holzhaltiges Streichrohpapier bei einer Geschwindigkeit von 800 m/min aufgetragen, der Streichauftrag ist 11 g/m²/Seite. Anschliessend wird das Papier in einem Superkalander satiniert.

Die Prüfung der gestrichenen Papiere ergab folgende Befunde:

| Dispersion 1 | Trockenrupf-festigkeit cm/sec | Nassrupf-festigkeit % | Geruch (gemäss Robinson-Test) Note |
|---|---|---|---|
| | OS[1] 61 | 30,1 | 2 |
| | SS[2] 71 | 49 | |
| Vergleich entsprechend DE-C-1 546 316 | OS 49 SS 54 | 20,7 33,3 | 4 |

[1] Oberseite des Papiers
[2] Siebseite des Papiers

Die mit Dispersion 1 erhaltenen Papiere wiesen gegenüber dem Vergleichsbeispiel eine mehr als 20% höhere Trockenrupffestigkeit und eine um ca. 50% höhere Nassrupffestigkeit auf. Ausserdem riecht das mit Dispersion 1 gestrichene Papier erheblich weniger als das mit der Vergleichsdispersion gemäss DE-C-1 546 316 erhaltene.

**Patentanspruch**

Geruchsarme, wässrige Bindemittel-Dispersionen für Papierstreichmassen auf der Basis von Copolymerisaten aus Butadien, Styrol und Acrylsäure, dadurch gekennzeichnet, dass das Copolymerisat

a) 25 bis 57,5 Gew.-% Butadien oder einer Mischung aus Butadien und Acrylsäureester, wobei der Gehalt des einpolymerisierten Butadiens mindestens 15 Gew.-% beträgt,

b) 40 bis 70 Gew.-% Styrol,

c) 1 bis 5 Gew.-% Maleinsäure oder Maleinsäureanhydrid und

d) 1,5 bis 7 Gew.-% Methacrylamid einpolymerisiert enthält.

**Revendication**

Dispersions aqueuses de liants pour compositions pour le couchage du papier peu odorantes à base de copolymères du butadiène, du styrène et de l'acide acrylique, caractérisées en ce que le copolymère contient comme composants copolymérisés:

a) 25 à 57,5% en poids de butadiène ou d'un mélange de butadiène et d'acrylate, la proportion du butadiène copolymérisé étant dans ce cas d'au moins 15% en poids,

b) 40 à 70% en poids de styrène,

c) 1 à 5% en poids d'acide maléique ou d'anhydride maléique et

d) 1,5 à 7% en poids de méthacryl-amide.

**Claim**

A low-odor aqueous binder dispersion for paper-coating compositions, based on a butadiene/styrene/acrylic acid copolymer, characterized in that the copolymer contains, as copolymerized units,

a) from 25 to 57.5% by weight of butadiene or a mixture of butadiene and acrylic ester, the content of butadiene units being at least 15% by weight,

b) from 40 to 70% by weight of styrene,

c) from 1 to 5% by weight of maleic acid or maleic anhydride and

d) from 1.5 to 7% by weight of methacrylamide.